# EUROPÄISCHE PATENTSCHRIFT

(11) **EP 2 143 996 B1**
(45) Veröffentlichungstag und Bekanntmachung des Hinweises auf die Patenterteilung: **17.07.2013**
(21) Anmeldenummer: 08003060.4
(22) Anmeldetag: 19.02.2008
(51) Int. Cl.: F28F 9/18, B23K 9/18, B23P 15/26, F22B 37/22

(54) **Sammler für einen Hochdruckapparat von Dampfkraftanlagen**
Collector for a high pressure device of a steam power array
Collecteur pour un appareil haute pression de dispositifs à vapeur

(43) Veröffentlichungstag der Anmeldung: 13.01.2010
(73) Patentinhaber: Balcke-Dürr GmbH, 40882 Ratingen (DE)
(72) Erfinder: Endlich, Günter, 59269 Beckum (DE); Wöstmann, Heinz-Josef, 50227 Ahlen-Vorhelm (DE)
(74) Vertreter: Lang, Friedrich

(56) Entgegenhaltungen:
- BE-A- 556 639
- FR-A- 1 140 960
- FR-E- 71 044
- GB-A- 929 896
- JP-A- 52 113 403
- US-A1- 2006 207 096
- YOKELL S: "HEAT-EXCHANGER TUBE-TO-TUBESHEET CONNECTIONS" CHEMICAL ENGINEERING, ACCESS INTELLIGENCE ASSOCIATION, ROCKVILLE, MA, US, 8. Februar 1982 (1982-02-08), Seiten 78-94, XP000856868 ISSN: 0009-2460

## Beschreibung

Die Erfindung betrifft ein Verfahren zur Herstellung eines Sammlers für einen Hochdruckapparat von Dampfkraftanlagen, sowie einen solchen Sammler und einen Hochdruckapparat mit einem solchen Sammler.

In Dampfkraftanlagen kommt ein Hochdruckapparat, insbesondere ein Hochdruckvorwärmer, zum Einsatz, welcher einen Sammler für einen Einlass von Speisewasser (Eintritts-Sammler) und einen Sammler für einen Auslass von erwärmtem Speisewasser (Austritts-Sammler) aufweist. Die Sammler sind mittels Rohren miteinander verbunden, wobei die Rohre bei einem bestimmten Typ eines Hochdruckapparates schlangenförmig in dem Hochdruckapparat geführt sein können. Die Rohre und somit das Speisewasser werden von einem in den Hochdruckapparat unter Druck zugeführten heißen Medium umströmt, so dass das Speisewasser vorgewärmt wird.

Der Anschluss eines Rohres für Speisewasser an den Sammler erfolgt üblicherweise mit einem Rohrnippel. Es sind verschiedene Verfahren bekannt geworden, einen Rohrnippel mit einem Sammler zu verbinden. Bei einem ersten Verfahren wird aus einem Stangenmaterial ein Nippel gedreht, welcher mit einer Sacklochbohrung versehen wird, deren Durchmesser kleiner oder gleich einer späteren Durchgangsbohrung ist. An der anzusetzenden Stirnfläche des Rohrnippels ist ein zylindrischer Ansatz vorgesehen, der in eine anzubringende Bohrung der Sammlerwand eingesetzt wird. Der zylindrische Ansatz erleichtert die Lage- und Richtungsbestimmung des anzubringenden Rohrnippels. Nach dem Einsetzen des Rohrnippels in die Sammlerwand werden beide Teile auf etwa 120 °C erwärmt und der Rohrnippel mit der Sammlerwand verschweißt. Dabei wird vorzugsweise das Unterpulverschweißen eingesetzt. Anschließend werden beide Teile erneut geglüht und die Sacklochbohrung durch den ursprünglich ungebohrten Teil des Rohrnippels bis durch die Sammlerwand hindurch durch Aufbohren und Reiben verlängert. Bei dieser Vorgehensweise wird gleichzeitig der Grund der Schweißnaht entfernt. Damit lässt sich erreichen, dass eine unvollständige Verschweißung im Grund der Schweißnaht und eine Kerbwirkung vermieden wird. Anschließend werden eine Farbeindringprüfung und eine Sichtprüfung durchgeführt. Bei diesem Verfahren lassen sich sehr gute Ergebnisse im Hinblick auf die Befestigung der Rohrnippel erreichen. Ungünstig ist bei diesem Verfahren jedoch, dass nach dem Verschweißen eines Rohrnippels jeder einzelne Rohrnippel spanabhebend bearbeitet werden muss. Bei großen Sammlern mit einer Vielzahl von Rohren ist dies mit einem hohen Arbeits- und Zeitaufwand verbunden.

Zur Vereinfachung dieses Verfahrens gibt es den Ansatz, die Gestaltung des Rohrnippels zu verändern. Bei einem alternativen Verfahren wird ein Rohrnippel verwendet, welcher keinen zylindrischen Ansatz aufweist, dafür aber mit einer Durchgangsbohrung versehen ist. Die Wandstärke des Rohrnippels im Bereich seiner Stirnfläche, die mit der Sammlerwand zu verbinden ist, ist verjüngt, so dass ein Durchschweißen der Berührungsflächen von Rohrnippel und Sammlerwand möglich ist. Eine nachträgliche Innenbearbeitung zur Herstellung des Durchgangs zwischen Rohrnippel und Sammlerwand und ein Entfernen der Schweißwurzel durch Aufbohren ist nicht mehr erforderlich. Es hat sich jedoch herausgestellt, dass ein Rohrnippel mit einer ringförmigen Berührfläche für die Sammlerwand schwierig auszurichten ist. Dazu muss der Rohrnippel vor dem eigentlichen Verschweißen geheftet werden, was einen erhöhten Arbeitsaufwand bedeutet. Bei Sammlern mit einem großen Durchmesser ist die jeweilige Schweißstelle zudem nicht einfach zugänglich, so dass spezielle Schweißgeräte erforderlich sind.

Sammler der betreffenden Art mit angeschweißten Rohrnippeln sind aus der GB 929,896 A und aus der US 2006/0207096 A1 (Fig. 2D) bekannt.

Sammler der betreffenden Art mit einstückig mit der Sammlerwand ausgebildeten Rohrnippeln, wobei diese Rohrnippel umformtechnisch gefertigt sind (z.B. durch Ziehen), sind aus der BE 556639 A, der FR 1.140.960 A, der JP 52 113403 A, der FR 71 044 E und auch aus der US 2006/0207096 A1 (Fig. 2D) bekannt. Nachteilig hierbei ist z.B., dass durch das Verformen der Sammlerwand kritische Kaltverfestigungen und/oder Versprödungen in das Material eingebracht werden können.

Es ist eine Aufgabe der Erfindung, ein Verfahren zur Herstellung eines Sammlers für Hochdruckapparate von Dampfkraftanlagen anzugeben, mit dem sich mindestens ein technisch zuverlässiger Rohrnippel an der Sammlerwand mit verhältnismäßig geringem Arbeitsaufwand vorsehen lässt. Es ist ferner eine Aufgabe der Erfindung, einen entsprechenden Sammler anzugeben.

Die Aufgaben werden durch die Merkmale der unabhängigen Ansprüche gelöst, wobei sich die Lösung der Aufgaben auch auf einen Hochdruckapparat erstreckt. Vorteilhafte Ausgestaltungen der Erfindung sind Gegenstand der jeweiligen Unteransprüche.

Der erfindungsgemäße Sammler für einen Hochdruckapparat von Dampfkraftanlagen weist mindestens einen Rohrnippel zum Anschweißen von Rohren für Speisewasser auf, wobei der Rohrnippel von der Sammlerwand nach außen hervorsteht und der Rohrnippel einstückig aus der Sammlerwand gebildet ist. Der Rohrnippel ist somit kein einzelnes Teil, welches an einer Sammlerwand ausgerichtet, angeheftet und angeschweißt werden muss. Eine spanende Bearbeitung eines Durchgangsloches zum Entfernen von Schweißgrund ist ebenfalls nicht erforderlich. Auch eine Glühbehandlung bis zu einer bestimmten Temperatur ist bei dem erfindungsgemäßen Sammler nicht mehr notwendig. Stattdessen ist der mindestens eine Rohrnippel aus der Sammlerwand gebildet. Rohrnippel und Sammlerwand sind somit ein Teil, so dass Schwierigkeiten durch zum Beispiel das Anbringen einer Schweißnaht nicht mehr auftreten können. Sämtliche Probleme, die mit dem Fügen von zwei unterschiedlichen Teilen einhergehen, werden vermieden. Indem der Rohrnippel einstückig aus der Sammlerwand gebildet ist, lässt sich bei geringem Arbeitsaufwand und hoher Zuverlässigkeit ein Rohrnippel an einen Sammler vorsehen.

Gemäß einer Ausführungsform der Erfindung ist die Wandstärke des Rohrnippels an einem ersten Ende, welches den Übergang zur Sammlerwand bildet, dicker als an einem gegenüberliegenden zweiten Ende, welches zum Anschweißen eines Rohres für Speisewasser vorgesehen ist. Damit kann im Bereich des Übergangs zur Sammlerwand eine relativ hohe Festigkeit erreicht werden, so dass bei einer Momentenbelastung durch das Rohr der Rohrnippel zuverlässig mit dem Sammler verbunden bleibt.

Besonders bevorzugt bildet das erste Ende des Rohrnippels an seiner Außenwand im Querschnitt einen Kragen mit konkaver Kontur. Dies reduziert die Kerbspannungen im Bereich des Übergangs zur Sammlerwand. Außerdem kann eine solche Kontur einfach gefertigt werden. Vorzugsweise ist der Rohrnippel mittels spanender Fertigung gebildet. Die Sammlerwand wird somit in der Umgebung des Rohrnippels spanend abgetragen, so dass der Rohrnippel als Überstand von der Sammlerwand hervorsteht.

Das erfindungsgemäße Verfahren zur Herstellung eines wir vorstehend beschriebenen Sammlers ist dadurch gekennzeichnet, dass der Rohrnippel aus der Sammlerwand durch spanende Bearbeitung, insbesondere durch Fräsen, so gefertigt wird, dass er von der Sammlerwand nach außen hervorsteht. Der Rohrnippel wird somit aus der Sammlerwand gefertigt, welche eine dickere Wandstärke als bei einer Sammlerwand nach dem Stand der Technik besitzt. Die nach der spanenden Bearbeitung verbleibende Wandstärke des Sammlers entspricht der Wandstärke, wie sie bei den Sammlern üblich sind, die nach dem Stand der Technik gefertigt werden.

Obwohl die spanende Fertigung im Hinblick auf die Festigkeit und Zuverlässigkeit des Übergangsbereiches zwischen Rohrnippel und Sammlerwand ein sehr sicheres Verfahren ist, kann zur Bestätigung des erfolgreich durchgeführten Verfahrens nach der spanenden Bearbeitung eine Farbeindringprüfung vorgenommen werden. Damit lässt sich erkennen, ob eventuell Risse im Übergangsbereich zwischen Rohrnippel und Sammlerwand vorliegen.

Gemäß der Erfindung weist ein Hochdruckapparat, insbesondere ein Hochdruckvorwärmer für eine Dampfkraftanlage, einen Sammler wie vorstehend beschrieben auf.

Nachfolgend wird die Erfindung anhand von eines in den Zeichnungen dargestellten Ausführungsbeispieles weiter beschrieben. Es zeigen:
- Figur 1: eine schematische Darstellung in einem Querschnitt von einem Hochdruckvorwärmer mit zwei Sammlern gemäß der Erfindung; und
- Figur 2: einen Querschnitt durch eine Sammlerwand mit einem zugehörigen Rohrnippel.

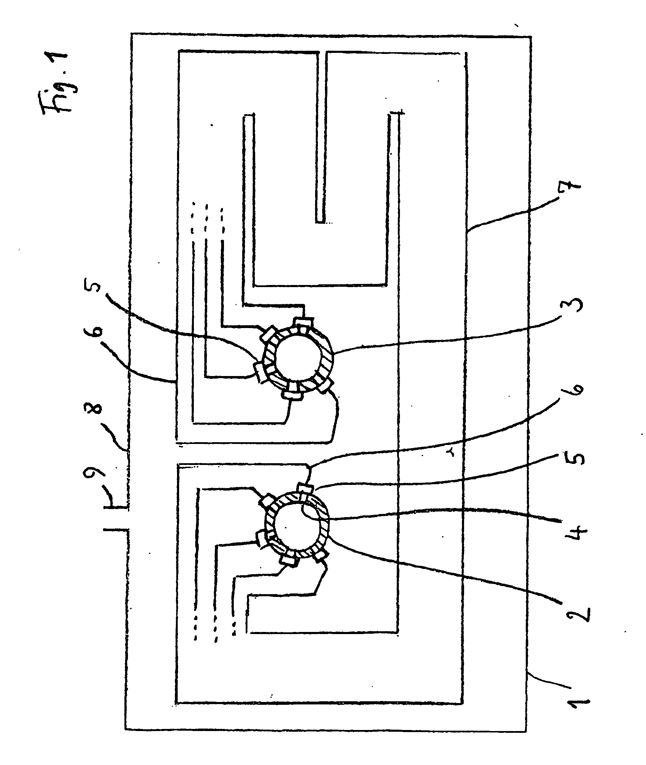

In Fig. 1 ist in einer schematischen Darstellung in einem Querschnitt vereinfacht ein Hochdruckvorwärmer 1 dargestellt. Der Vorwärmer weist einen Eintritts-Sammler 2 für die Zufuhr von Speisewasser auf. Das Speisewasser wird durch eine Vielzahl von Durchgangsbohrungen 4 zu jeweils zugehörigen Rohrnippeln 5 geleitet, durch welche das Speisewasser in die angefügten Rohre 6 eindringen kann. Die Rohre 6 sind bei der in Fig. 1 dargestellten Ausführungsform so angeordnet, dass sie in Form einer Rohrschlange 7 den Vorwärmer durchlaufen. Am Rand des Vorwärmer-Gehäuses 8 ist ein Einlass 9 für die Zufuhr von Dampf vorgesehen, welcher unter Druck mit den Rohrschlangen in Kontakt gebracht wird. Das in den Rohrschlangen vorhandene Speisewasser erwärmt sich dadurch und gelangt nach Passieren der Rohrschlangen zum Austritts-Sammler 3. An dem Austritts-Sammler 3 sind wie beim Eintritts-Sammler 2 die Rohre 6 mittels Rohrnippel 5 angeschlossen. Nach dem Passieren der Rohrnippel 5 und Durchlaufen einer zugehörigen Durchgangsbohrung durch die Wand des Austritts-Sammlers 3 gelangt das erwärmte Speisewasser somit in einen zentralen Kanal des Austritts-Sammlers 3 und kann den Vorwärmer 1 verlassen.

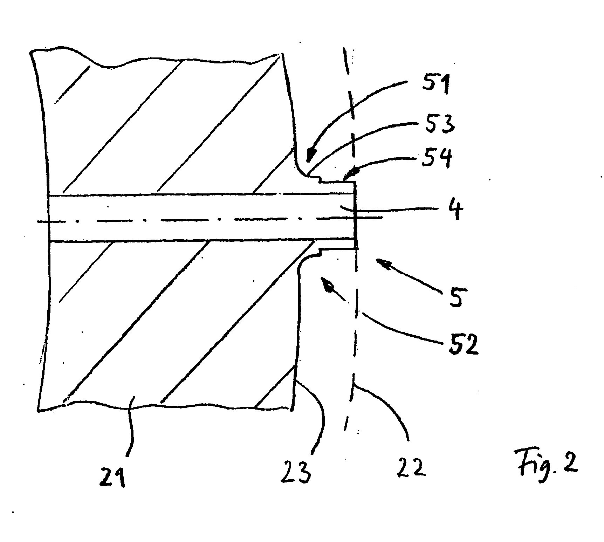

Die Gestaltung eines Rohrnippels 5 an einem Sammler 2 oder 3 gemäß der Erfindung ist aus Fig. 2 ersichtlich. Von dem Sammler 2 oder 3 ist nur ein Ausschnitt aus einem äußeren Bereich der Sammlerwand 21 in einem Querschnitt dargestellt. Die ursprüngliche Kontur 22 der Sammlerwand 21 ist mit einer gestrichelten Linie angedeutet. Durch zum Beispiel spanende Bearbeitung wird die ursprüngliche Kontur 22 der Sammlerwand bis zu der mit Bezugszeichen 23 dargestellten Kontur der Sammlerwand verändert, bis der Rohrnippel 5 als unveränderter Teil des Sammlerwand 21 übrig bleibt und von der Kontur 23 hervorsteht. Bei der in Fig. 2 dargestellten Ausführungsform weist der Rohrnippel 5 ein erstes Ende 51 auf, welches im Übergangsbereich 52 zwischen Rohrnippel 5 und Sammlerwand 21 durch einen konkaven Kragen 53 gebildet ist. Damit ist im Hinblick auf die Festigkeit des Übergangsbereiches 52 zwischen Rohrnippel 5 und Sammlerwand 21 eine besonders steife Verbindung geschaffen, welche eine auftretende Momentenbelastung ohne größere Gefahr für eine Rissbildung im Bereich 52 aufnehmen kann.

Das zweite Ende 54 ist dazu vorgesehen, mit einem Rohr 6 verbunden zu werden, wobei das Rohr 6 in Fig. 2 nicht dargestellt ist. Der Durchtritt von Speisewasser erfolgt durch die Durchgangsbohrung 4, welche durch den Rohrnippel 5 und die Sammlerwand 21 verläuft.

## Patentansprüche

1. Verfahren zur Herstellung eines Sammlers (2, 3) für einen Hochdruckapparat (1) von Dampfkraftanlagen, wobei der Sammler (2, 3) eine Sammlerwand (21) mit Rohrnippeln (5) zum Anschweißen der Rohre (6) für Speisewasser aufweist und wobei die Rohrnippel (5) einstückig aus der Sammlerwand (21) gebildet sind und von der Sammlerwand (21) nach außen hervorstehen,
**dadurch gekennzeichnet,**
**dass** die Rohrnippel (5) durch spanende Bearbeitung aus einer Sammlerwand mit einer ursprünglich dickeren Wandstärke gefertigt wird, wobei die ursprüngliche Außenkontur (22) der Sammlerwand (21) durch die spanende Bearbeitung bis zu einer Außenkontur (23) der Sammlerwand (21) verändert wird, bis die Rohrnippel (5) als unveränderter Teil der Sammlerwand (21) übrig bleiben und von dieser Außenkontur (23) hervorstehen.

2. Verfahren nach Anspruch 1,
**dadurch gekennzeichnet,**
**dass** nach der spanenden Bearbeitung eine Farbeindringprüfung vorgenommen wird.

3. Sammler (2, 3) für einen Hochdruckapparat (1) von Dampfkraftanlagen, wobei der Sammler (2, 3) eine Sammlerwand (21) mit Rohrnippeln (5) zum Anschweißen der Rohre (6) für Speisewasser aufweist und wobei die Rohrnippel (5) einstückig aus der Sammlerwand (21) gebildet sind und von der Sammlerwand (21) nach außen hervorstehen,
**dadurch gekennzeichnet,**
**dass** dieser mit dem Verfahren gemäß dem Anspruch 1 oder 2 hergestellt ist.

4. Sammler (2, 3) nach Anspruch 3,
**dadurch gekennzeichnet,**
**dass** die Wandstärke die Rohrnippel (5) an den ersten Enden (51), welche den Übergang zur Sammlerwand (21) bilden, dicker ist als an den gegenüberliegenden zweiten Enden (54), welche zum Anschweißen der Rohre (6) für Speisewasser vorgesehen sind.

5. Sammler (2, 3) nach Anspruch 4,
**dadurch gekennzeichnet,**
**dass** die ersten Enden (51) der Rohrnippel (5) im Querschnitt an ihrer Außenwand jeweils einen Kragen mit konkaver Kontur (53) bilden.

6. Sammler (2, 3) nach Anspruch 3, 4 oder 5,
**dadurch gekennzeichnet,**
**dass** an Rohrnippeln (5) zwischen den ersten Enden (51) und den zweiten Enden (54) an ihrer Außenwand jeweils eine Schulter ausgebildet ist

7. Hochdruckapparat (1), insbesondere Hochdruckvorwärmer für eine Dampfkraftanlage,
**dadurch gekennzeichnet,**
**dass** dieser einen Sammler (2, 3) nach einem der Ansprüche 3 bis 6 aufweist.

## Claims

1. A method for producing a header (2, 3) for a high-pressure apparatus (1) of steam power plants, with the header (2, 3) comprising a header wall (21) having pipe nipples (5) for welding on the pipes (6) for feed water, and with the pipe nipples (5) being made integrally from the header wall (21) and protruding outwardly from the header wall (21),
**characterized in that**
the pipe nipples (5) are produced from a header wall originally having a thicker wall thickness by metal-cutting, with the original outer contour (22) of the header wall (21) being changed by metal-cutting up to an outer contour (23) of the header wall (21) until the pipe nipples (5) remain as an unchanged part of the header wall (21) and protrude from said outer contour (23).

2. The method according to claim 1,
**characterized in that**
a dye penetration inspection is performed after metal-cutting.

3. A header (2, 3) for a high-pressure apparatus (1) of steam power plants, with the header (2, 3) comprising a header wall (21) having pipe nipples (5) for welding on the pipes (6) for feed water, and with the pipe nipples (5) being made integrally from the header wall (21) and protruding outwardly from the header wall (21),
**characterized in that**
it is produced using the method according to claim 1 or 2.

4. The header (2, 3) according to claim 3,
**characterized in that**
the wall thickness of the pipe nipples (5) is thicker at their first ends (51) which form the transitional regions to the header wall (21) than at their opposite second ends (54) which are provided for welding on the pipes (6) for feed water.

5. The header (2, 3) according to claim 4,
**characterized in that**
the first ends (51) of the pipe nipples (5) respectively form in the cross section a collar with a concave shape (53) on their outside wall.

6. The header (2, 3) according to claim 3, 4 or 5,
**characterized in that**
a respective shoulder is arranged on each of the outside walls of the pipe nipples (5) between the first ends (51) and the second ends (54).

7. A high-pressure apparatus (1), especially a high-pressure preheater for a steam power plant,
**characterized in that**
it comprises a header (2, 3) according to any one of claims 3 to 6.

## Revendications

1. Procédé pour la fabrication d'un collecteur (2, 3) pour un appareil sous haute pression (1) dans des groupes de génération à vapeur, dans lequel le collecteur (2, 3) présente une paroi de collecteur (21) avec des piquages de tuyauterie (5) pour le soudage des tuyauteries (6) d'eau alimentaire et dans lequel les piquages de tuyauterie (5) sont formés d'un seul tenant à partir de la paroi de collecteur (21) et dépassent vers l'extérieur à partir de la paroi de collecteur (21),
**caractérisé en ce que** les piquages de tuyauterie (5) sont fabriqués par usinage avec enlèvement de matière à partir d'une paroi de collecteur qui a initialement une plus forte épaisseur de paroi, le contour extérieur d'origine (22) de la paroi de collecteur (21) étant modifié par l'usinage avec enlèvement de matière jusqu'à un contour extérieur (23) de la paroi de collecteur (21), jusqu'à ce que les piquages de tuyauterie (5) subsistent comme une partie non modifiée de la paroi de collecteur (21) et dépassent de ce contour extérieur (23).

2. Procédé selon la revendication 1, **caractérisé en ce qu'**un essai par ressuage est effectué après l'usinage avec enlèvement de matière.

3. Collecteur (2, 3) pour un appareil sous haute pression (1) dans des groupes de génération à vapeur, le collecteur (2, 3) présentant une paroi de collecteur (21) avec des piquages de tuyauterie (5) pour le soudage des tuyauteries (6) d'eau alimentaire et les piquages de tuyauterie (5) étant formés d'un seul tenant à partir de la paroi de collecteur (21) et dépassant vers l'extérieur de la paroi de collecteur (21),
**caractérisé en ce qu'**il est fabriqué par le procédé selon la revendication 1 ou 2.

4. Collecteur (2, 3) selon la revendication 3, **caractérisé en ce que** l'épaisseur de paroi des piquages de tuyauterie (5) aux premières extrémités (51) formant la transition avec la paroi de collecteur (21) est plus forte qu'aux deuxièmes extrémités (54) opposées destinées au soudage des tuyauteries (6) d'eau alimentaire.

5. Collecteur (2, 3) selon la revendication 4, **caractérisé en ce que** les premières extrémités (51) des piquages de tuyauterie (5) forment chacune en section sur sa paroi extérieure un collet à contour concave (53).

6. Collecteur (2, 3) selon la revendication 3, 4 ou 5, **caractérisé en ce qu'**un épaulement est formé sur chacun des piquages de tuyauterie (5) entre la première extrémité (51) et la deuxième extrémité (54) sur la paroi extérieure.

7. Appareil sous haute pression (1), en particulier pré chauffeur sous haute pression pour un groupe de génération à vapeur, **caractérisé en ce qu'**il comporte un collecteur (2, 3) selon l'une des revendications 3 à 6.
